# EUROPEAN PATENT APPLICATION

(11) **EP 1 326 179 A2**
(43) Date of publication of application: **09.07.2003**
(21) Application number: 02028248.9
(22) Date of filing: 16.12.2002
(51) Int. Cl.: G06F 17/30

(54) **Shop-in-a-shop website construction**

(30) Priority: 21.12.2001 US 24352
(71) Applicant: L'OREAL, 75008 Paris (FR)
(72) Inventor: Peyrelevade, Jérome, 75017 Paris (FR); Pouteau, Arnold, 75013 Paris (FR); Burgaud, Dominique, 93110 Rosny sous bois (FR)
(74) Representative: Tanty, François

(57) **Abstract**

Systems, methods, and products may employ a module for use in constructing the first and second websites, such that, using the same module, the first and second websites may incorporate common information while each incorporating information unique to each website. In this way, a brand owner might construct a single module that may be used in the websites of multiple resellers. A single change to the module might then update multiple reseller websites.

## Description

The invention relates to systems and methods for facilitating electronic commerce using the Internet. It may have particular benefit for enabling the same product to be sold through multiple portals using a modular construction.

Brand owners typically sell products through multiple channels of commerce. For example, they may sell directly to consumers through company controlled stores or websites. At the same time, they might make sales through a variety of retailers, wholesalers, and other third parties. Regardless of the commerce channel, brand owners usually have an interest in controlling how their products are presented to consumers. Control may be important for a variety of reasons including protection of trademarks and goodwill, and for implementing a uniform branding and marketing strategy. For example, the brand owner's marketing strategy may promote a certain product "image" that may be undermined if the product is presented in a manner not authorized by the brand owner.

Desired control over product presentation is a relevant issue within many industries, including the cosmetics industry, where brand owners often sell cosmetics through local retailers while retaining substantial control of marketing and/or branding. To this end, brand owners typically employ sales and marketing forces to project a specific image and to educate the sales forces of resellers.

The advent of the Internet has made it much more difficult―when compared to traditional "brick-and-mortar" retail outlets―for a supplier to control marketing and/or branding of cosmetics. Moreover, e-commerce websites may offer (or display) a supplier's cosmetics in dozens of web environments consisting of different languages, countries, and/or retailers.

Brand owners may seek to control e-commerce marketing and branding in a variety of ways. They might employ personnel to write a separate web page for each reseller's website. They might work hand-in-hand with resellers in website construction. On the other hand, they might provide guidelines to resellers and then attempt to police the guidelines. Regardless of whether any of these approaches may be implemented effectively, each change in packaging or change in other product-related information will naturally require revisions to scores of reseller's websites. And if a brand owner who sells multiple products periodically changes information about even a few products, just keeping up with the corresponding website changes can be a daunting task.

Systems and methods consistent with the present invention may employ a module for use in constructing the first and second websites, such that, using the same module, the first and second websites may incorporate common information while each incorporating information unique to each website. In this way, a brand owner might construct a single module that may be used in the websites of multiple resellers. A single change to the module might then simultaneously update multiple reseller websites.

More specifically, systems and methods consistent with the present invention facilitate modular construction of at least portions of first and second websites configured to offer for sale at least one common product. Moreover, systems and methods consistent with the present invention may define at least one module for containing a first set of information for incorporation into a first website, an alternative second set of information for incorporation into the second website, a third set of information for incorporation into both the first and second websites, and rules governing how the first, second, and third sets of information are to be incorporated into the first and second websites.

At least two modes may be assigned to the module. In a first mode, rules in the module may cause the first and third sets of information to be incorporated into the first website while the second set of information is prevented from being displayed. In a second mode, the rules may cause the second and third sets of information to be incorporated into the second website while the first set of information is prevented from being displayed.

The preceding summary is merely intended to provide the reader with a very brief flavor of a few aspects of the invention, and is not intended to restrict in any way the scope of the claimed invention. In addition, it is to be understood that both the foregoing general description and the following detailed description are exemplary and explanatory only and are not restrictive of the invention, as claimed.

The accompanying drawings, which are incorporated in and constitute a part of this specification, illustrate various embodiments and aspects of the present invention and, together with the description, explain the principles of the invention. In the drawings:
FIG. 1 is a first flow chart of an exemplary modular construction method consistent with the present invention;
FIG. 2 is a schematic diagram of a first exemplary system environment consistent with the present invention;
FIG. 3 is a schematic diagram of a second exemplary system environment consistent with the present invention;
FIG. 4 is a schematic diagram of an exemplary database consistent with the present invention;
FIG. 5 is a second flow chart of an exemplary modular construction method consistent with the present invention;
FIG. 6 is a flow chart of a set of exemplary steps for determining context consistent with the present invention;
FIG. 7 depicts exemplary sets of information for use in constructing at least portions of a website consistent with the present invention;
FIG. 8 depicts a first website customized based on context consistent with the present invention;
FIG. 9 depicts a second website customized based on context consistent with the present invention;
FIG. 10 depicts a third website customized based on context consistent with the present invention;
FIG. 11 depicts a fourth website customized using a module based on context consistent with the present invention; and
FIG. 12 is a third flow chart of an exemplary method consistent with the present invention.

Reference will now be made in detail to the invention, examples of which are illustrated in the accompanying drawings. Wherever possible, the same reference numbers will be used throughout the drawings to refer to the same or like parts.

Methods and systems consistent with an embodiment of the present invention permit a computing platform, such as a web server at a website, to make available a module for use in constructing websites that offer common products for sale through a communication channel, such as the Internet. For example, if two websites offer a common product (e.g., the same brand of lipstick) for sale, a web server may make a common display module available to each of the websites.

The web server may also enable modes to a module, such that in each website the module may have an appearance and/or function customized to the website. For example, a website of cosmetic manufacturer Lancôme, may call a rule in the module that causes an image of a Lancôme product to be displayed adjacent a button for activating a Lancôme payment engine. When the module is employed in the website of Macy's Department Store, alternate rules in the module may cause the very same Lancôme product image to appear adjacent to a button for activating a Macy's payment engine. If Lancôme later changes the packaging of the product, requiring an update to the product image, a single change to the module may update both the Lancôme and the Macy's websites.

By way of another example, a first website using a first rule may display an image of a common product along with an English text description of the common product. A second website may use the same module, in a second mode to display the same image of the common product associated with Japanese text description of the product. Thus, while the first and second websites each display sets of information describing the same common product, the displayed sets of information may differ, permitting the information describing the common product to be customized (or tailored).

The sets of information may also include location information for customizing the placement of information on each of the first and second websites and/or style information, such as font, color, and language information, for each of the websites. Accordingly, by using a module with at least two modes, the construction of the first and second websites may be streamlined, while at the same time, enabling an increase in uniformity and brand control.

In one embodiment, the first and second websites may sell a wide variety of products. For example, one or more websites may be associated with a reseller (or retailer) that offers for sale products such as men's clothing, women's clothing, shoes, furniture, jewelry, and cosmetics. Thus, one or more of the websites may serve as a virtual retail "shop" on the Internet.

On the other hand, a web server may be associated with a product manufacturer/supplier, such as a cosmetics manufacturer. The manufacturer's web server may use a module to provide to each of the first and second websites information describing cosmetics. In this embodiment, when a consumer browses the manufacturer's cosmetics at the reseller's website, the manufacturer's website may provide product information to the reseller's website. The information provided by the manufacturer's website may permit a consumer to display the manufacturer's product information. As product packaging, use information, or pricing changes, a single change to the module simultaneously update all websites using that module. In addition, by controlling the product information provided to consumers, the supplier may retain a measure of marketing and branding control. Moreover, in one embodiment, the product information, provided to the reseller website, may establish a virtual "shop" (or boutique) for the supplier within the reseller's virtual "shop."

Systems and methods consistent with the invention may facilitate modular construction of at least portions of first and second websites configured to offer for sale at least one common product. Such facilitation may involve the establishment of one or more modules that may be incorporated into a plurality of websites.

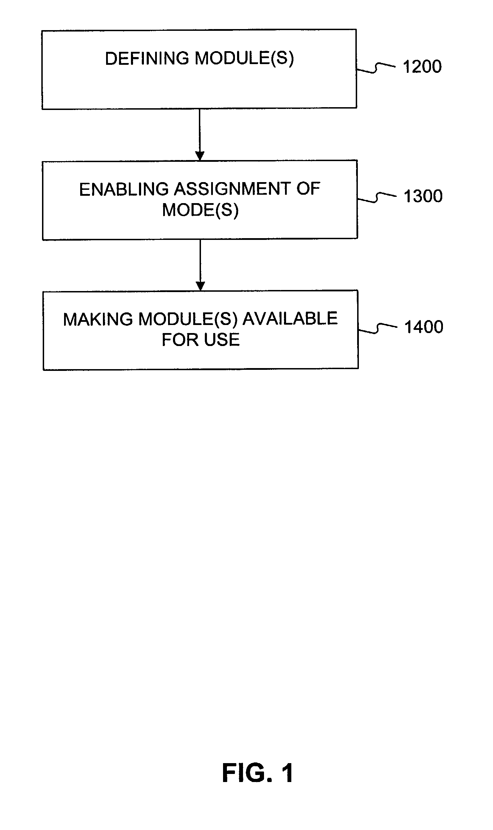

FIG. 1 is a flow chart of an exemplary method consistent with the principles of the invention. As illustrated at step 1200 in FIG. 1, a module may be defined. The module may contain a first set of information for incorporation into a first website, an alternative second set of information for incorporation into a second website, and third set of information for incorporation into both the first and second websites. The module may further include rules governing how the first, second, and third sets of information are to be incorporated into the first and second websites. Examples of types of websites in which the modules may be incorporated, are discussed throughout this application as are examples of the first, second and third sets of information and the rules governing incorporation.

A method consistent with the invention may also include enabling the assignment of at least two modes to the module, such that in a first mode, rules in the module are accessed to cause the first and third sets of information to be incorporated into the first website while the second set of information is prevented from being incorporated, and in the second mode, rules in the module are accessed to cause the second and third sets of information to be incorporated into the second website while the first set of information is prevented from be incorporated. This step is exemplified by block 1300 in the flow chart of FIG. 1, and this step may occur in a variety of ways. For example, as is discussed later in additional detail, enabling the assignment of at least two modes to the module may include adopting a format for the module that permits the module to be called by multiple addresses and permits a display and/or function of the module to change based on the address used to call the module.

A method consistent with the invention may further include making the module available for use in constructing the first and second websites, such that, using the same module, the first and second websites may incorporate common information while each incorporating information unique to each website. This step is generally depicted at block 1400 in FIG. 1. The module may be made available in one or more of many ways. For example, it may be transmitted physically, on a storage medium to an entity responsible for maintaining one or more of the first and second websites. The storage medium may be a magnetic medium such as a floppy disk, an optical medium such as a CD or DVD, or any other medium available to convey the module information. Alternatively, the module may be made available by providing (or arranging for) a location from which the module may be electronically downloaded through, for example, a network such as the Internet. The module may also be made available by maintaining the module at a network location, so that one or more of the first and second websites may access the module remotely without necessarily physically incorporating the module into their websites. This can occur, for example, by providing a website with an address which can be incorporated into the website in lieu of content. When a user seeks to access the content, the website may seamlessly link into the remote module, providing the user with an impression that the content resides in the user-accessed website.

According to one aspect of the invention, a single entity (such as the brand owner) may be provided with authority to modify a module. Alternatively, rules may allow some or all of the modules to be updated by other parties. For example, a rule may permit a reseller to update payment engine information (e.g., pricing) but prevent the reseller from altering product description content.

Alternative and cumulative examples of how the method of FIG. 1 may operate are discussed below.

A computing platform (or processor) may be used by an exemplary system consistent with the present invention to define at least one module (step 1200).

In one aspect of the invention, the sets of information may include content information for a web page, such as text, graphics, audio, and/or video. The sets of information may also include rules (or code) associated with the module, such as code for a payment engine, code that determines placement of information on a website, code that determines the language of the information provided to a website, code that determines the context of the request, and/or any other code associated with a function that can be incorporated into a website/web page. Moreover, the sets of information may include a module description that describes (or lists) the content information and/or rules associated with the module.

The computing platform may also enable the assignment of at least two modes to the module (step 1300), such that in a first mode, rules in the module are accessed to cause the first and third sets of information to be incorporated into the first website while the second set of information is prevented from being displayed, and in a second mode rules in the module are accessed to cause the second and third sets of information to be incorporated into the second website while the first set of information is prevented from being incorporated. In one aspect of the invention, a computing platform may enable the assignment of at least two modes to a module. In a first mode, a computing platform at a supplier's website may access rules associated with a module. Based on the accessed rules (or code), the computing platform may cause the first mode to be assigned to a first website, such that the first and third sets of information may be incorporated into the first website. Moreover, while in the first mode, the computing platform may prevent the second set of information from being incorporated into the first website. Although the computing platform with the enabled module may be located at the supplier website, a skilled artisan would recognize that the computing platform may instead be located anywhere.

Alternatively, in a second mode, the computing platform may access rules. Based on the accessed rules (or code), the computing platform may cause the second and third sets of information to be incorporated into a second website while preventing the first set of information from being incorporated into the first website. In one aspect of the invention, the computing platform may prevent the first set of information from being incorporated into the first website by not providing the information to the first website. Accordingly, at least portions of the first and second websites may include information common to both websites (i.e., the third set of information). Furthermore, the first and second websites may include information unique (or customized) to the each website (i.e., the first and second sets of information). Moreover, changes in product packaging, use information, or pricing require a single change to the module. The updated module thus updates all websites using that module, reducing the need for a supplier to individually update retail websites when such changes occur.

Furthermore, the computing platform may make the module available for use (step 1400) in constructing the first and second websites, such that, using the same module, the first and second websites may incorporate common information while each incorporating information unique to each website. The computing platform may make the module with at least two modes available for use in constructing the websites (or web pages) of the first and second websites by providing information to the first and second websites over the Internet. For example, in one aspect of the invention, the module is invoked via a call over the Internet. Alternatively, the computing platform may make the module available to websites by providing the module over the Internet, such that a processor at each of the websites uses the module to construct at least portions of its website.

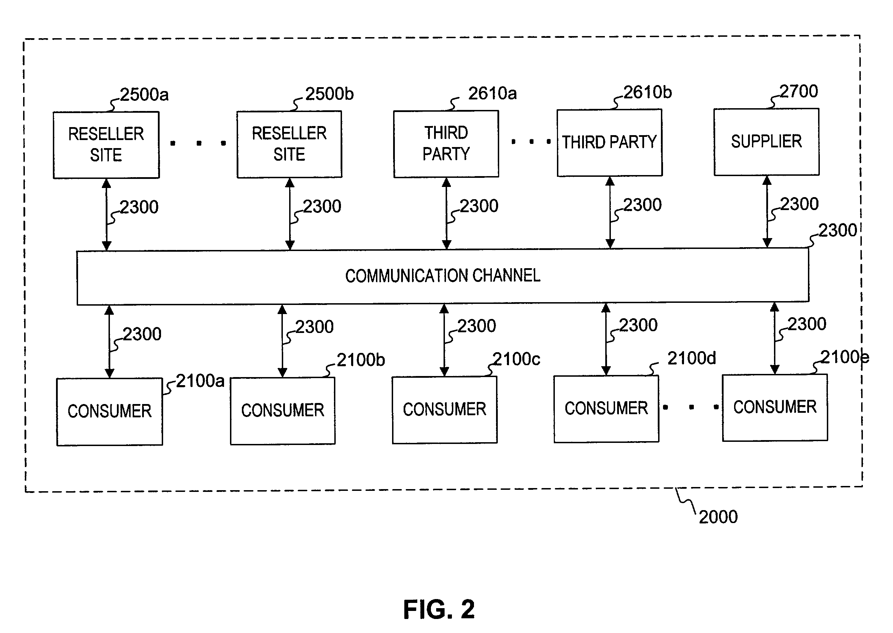

FIG. 2 is a schematic diagram of a first exemplary system 2000 for constructing at least portions of a website configured to offer a product, such as a cosmetic product, for sale. FIG. 2 illustrates one or more reseller websites 2500a, 2500b, one or more third party websites 2610a, 2610b, one or more consumers 2100a-2100e, a communication channel 2300, and a supplier website 2700.

The consumers 2100 may access communication channel 2300 via a processor (or computing platform) configured with a web browser. The consumers 2100 may use communication channel 2300 to browse the websites of the resellers 2500, the third party websites 2610, and the supplier website 2700.

The reseller websites 2500 may include a processor (or computing platform), such as a web server, for providing information, such as a web page. The reseller websites 2500 may also include information that describes and/or offers for sale a variety of products. For example, a reseller website 2500 may offer a wide selection of products that are supplied by one or more supplier's.

The supplier website 2700 may include a computing platform (or processor), such as a web server, for providing information that describes, supplies, and/or offers for sale one or more products. In one aspect of the invention, the supplier website 2700 may correspond to a website for a cosmetics manufacturer, supplier, and/or distributor. Although the description herein refers to a cosmetics supplier's website, the invention in a broader sense is not limited to cosmetics. Rather the invention may be used in connection with the sale of any product or service.

The third party websites 2610 may include a processor (or computing platform), such as a web server, for providing information that describes and/or offers for sale one or more products. In one aspect of the invention, a third party website 2610a may act as an agent (or intermediary) for the sale of products by directing a consumer 2100a to a reseller website 2500a or the supplier website 2700. For example, the third party website 2610a may serve as a portal to other Internet sites. In this example, the consumer 2100a may use a web browser to view the third party website 2610a and search for a product. The third party website 2610a may then display the product found through the search, direct the consumer 2100a to another website, and/or permit the consumer 2100a to purchase the product.

In one aspect of the invention, the merchant associated with the supplier website 2700 may be a manufacturer who supplies products such as cosmetics to resellers associated with websites 2500 and third party websites 2610. The supplier website 2700 may include a computing platform that provides information, using a module, such that the information serves as content for the reseller websites 2500 and the third party websites 2610. Accordingly, one or more of the products offered for sale on the reseller websites 2500 and/or third party websites 2610 may be provided by the supplier and/or the supplier website 2700.

By way of example, system 2000 may operate as follows. A consumer 2100a may browse a first website. The first website may be associated with a reseller of products, such as reseller website 2500a. When the consumer 2100a views on the reseller's website a product associated with a supplier's website (e.g., a cosmetic, such as a brand of lipstick), the supplier website 2700 may receive a request from the reseller website 2500a to provide information such as, for example, an image of a model wearing lipstick, an image of lipstick, and/or a text description of the lipstick.

Similarly, another consumer 2100b may browse for products at a second website, such as the reseller website 2500b. When the consumer 2100b views at the reseller website 2500b a product associated with the supplier website 2700 (e.g., a cosmetic product, such as a brand of lipstick), a computing platform at the supplier website 2700 may receive a request from the second reseller website 2500b to provide information.

Although consumers 2100a, 2100b may browse reseller websites 2500a, 2500b for the same brand of lipstick associated with the supplier website 2700, the first consumer 2100a may access the cosmetic product information from the reseller website 2500a, and the second consumer 2100b may access the cosmetic product information from a different reseller website 2500b. When that is the case, the supplier website 2700 may use a module to provide information, such as cosmetic product information describing the lipstick, that is customized to the context (or origin) of each request. In one aspect of the invention, the supplier 2700 controls the module and thus controls the product brand.

In one aspect of the invention, the first reseller website 2500a may be a retailer's website in Japan, and the second reseller 2500b may be a retailer's website in the United States. Although the consumers 2100a, 2100b request the same product (e.g., the supplier's lipstick), the product information provided to each consumer 2100a, 2100b may be customized. For the retailer's website in Japan (i.e., the first reseller 2500a), the supplier website 2700 may provide information, such as an image of a model wearing lipstick, an image of the lipstick case, and a text description of the lipstick in Japanese. On the other hand, for the retailer's website in the United States (i.e., the second reseller 2500b), the supplier website 2700 may provide information, such as an image of a model wearing lipstick, an image of the lipstick case, and a text description of the lipstick in English. As a result, the supplier website 2700 customizes the information provided to each of the websites by providing information unique to each of the websites while also providing information that is common to both websites.

Moreover, information provided to each reseller websites 2500a, 2500b may include location information (or rules) for placing product information on a web page. Accordingly, the computing platform at the supplier website 2700 may also customize the placement of information provided to each of the reseller websites 2500a, 2500b. Furthermore, in one aspect of the invention, the placement of the information may be customized based on the context of the request (e.g., whether request is associated with the first reseller 25001 or the second reseller 2500b).

In one embodiment, a computing platform (not shown) at the supplier website 2700 may define at least one module (step 1200 in FIG. 1). The computing platform may assign at least two modes to the module (step 1300 in FIG. 1). The computing platform may enable assignment of a first mode to a first website and a second mode to a second website. In this embodiment, the first website may correspond to a Japanese reseller website (e.g., reseller website 2500a) and the second website corresponds to a U.S. reseller website (e.g., reseller website 2500b). In the first mode, the computing platform may access rules in the module causing first and third sets of information to be incorporated into the Japanese reseller website 2500a while preventing the second set of information from being displayed or incorporated into the Japanese reseller's website 2500a. In the second mode, the computing platform accesses rules in the module causing second and third sets of information to be incorporated into the U.S. reseller website 2500a while preventing the first set of information from being displayed or incorporated into the U.S. reseller's website. Returning to the above example of a model wearing lipstick, the first set of information may include Japanese language text description of the lipstick, the second set of information may include an English language text description of the lipstick, and the third set of information may include an image/graphic of the model wearing lipstick.

Although, in this example, each mode corresponds to a single website, any other scheme of assigning modes to websites may be implemented instead. For example, a mode may correspond to a group of websites. Alternatively, a mode may correspond to a product or group of products.

Furthermore, the computing platform at the supplier website 2700 may make the module available for use (step 2400 at FIG. 1) in constructing the first and second websites (e.g., reseller websites 1500a, 1500b), such that, using the same module, the first and second websites may incorporate common information while each incorporating information unique to each website. For example, the computing platform may make the module available by permitting the module to be called via the a communication channel 2300, such as the Internet, by the reseller websites 2500a, 2500b. Alternatively, the computing platform at the supplier website 2700 may provide a single module with at least two modes to the first and second websites, permitting a processor at each website to use the module to enable the appropriate mode.

Moreover, the computing platform may enable updates to the module. For example, when a retailer wants to update prices associated with a product, the retailer may send the updated pricing information to the computing platform at the supplier website 2700. The computing platform may then update the module to include the new pricing information. Accordingly, when the module provides content to the retailer, the module provides the updated pricing information, customizing the price of the product based on context.

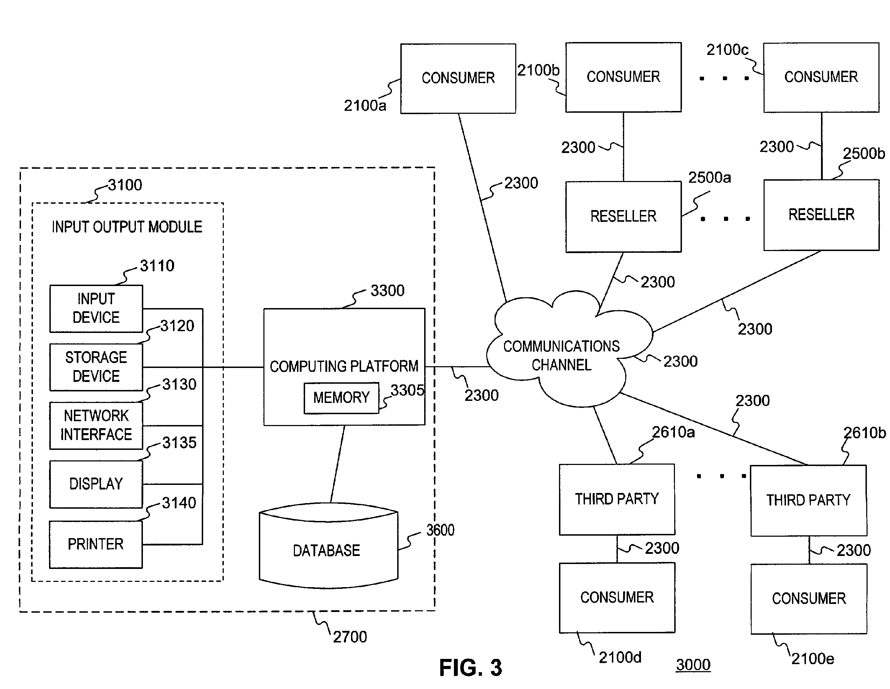

FIG. 3 illustrates another exemplary system environment consistent with systems and methods of the present invention. As illustrated in FIG. 3, the system environment 3000 may include a supplier website 2700 with an input/output module 3100, a computing platform 3300, and a database 3600. The system 3000 may also involve a communication channel 2300, one or more consumers 2100a-2100e, one or more resellers 2500a, 2500b, and one or more third party websites 2610a, 2610b.

In the embodiment of FIG. 3, the computing platform 3300 may include a processor such as a PC or mainframe computer for performing various functions and operations. Computing platform 3300 may be implemented, for example, by a general purpose computer or data processor selectively activated or reconfigured by a stored computer program (or code), or may be a specially constructed computing platform for carrying-out the features and operations disclosed herein. Moreover, computing platform 3300 may be implemented or provided with a wide variety of components or systems including, for example, one or more of the following: a central processing unit, a co-processor, memory 3305, registers, and other data processing devices and subsystems. The computing platform 3300 may also serve as a web server for the supplier website 2700.

Communications channel 2300 may include, alone or in any suitable combination a telephony-based network, a local area network (LAN), a wide area network (WAN), a dedicated intranet, the Internet, or a wireless network. Further, any suitable combination of wired and/or wireless components and systems may be incorporated into communication channel 2300.

Although the computing platform 3300 may connect to the consumers 2100a-2100e, the resellers 2500a, 2500b, and the third party websites 2610a, 2610b through the communication channel 2300, computing platform 3300 may also connect directly to the any of the consumers 2100a-2100e, the resellers 2500a, 2500b, and/or the third party websites 2610a, 2610b, bypassing the communication channel 2300.

Computing platform 3300 may also communicate with input/output module 3100 using connections or communications links, as illustrated in FIG. 3. Alternatively, communication between computing platform 3300 and input/output module 3100 may be achieved using a network (not shown) similar to that described above for communication channel 2300. One of ordinary skill in the art would recognize that computing platform 3300 may be located in the same location or at a geographical separate location from input/output module 3100 by using dedicated communication links or a network.

Input/output module 3100 maybe implemented with a wide variety of devices to receive and/or provide information. Referring to FIG. 3, input/output module 3100 may include an input device 3110, a storage device 3120, a network interface 3130, a display, 3135, and/or a printer 3140. Although FIG. 3 only illustrates a single input/output module 3100, a plurality of input/output modules (not shown) may also be used. Moreover, a person of ordinary skill in the art would recognize that the input/output module 3100 may be configured to provide an input only or an output only.

Input device 3110 may include any suitable mechanism for inputting information to the computing platform 3300. Such mechanisms may include a keyboard, a mouse, a track ball, a disk drive, a microphone, a telephone or any other mechanism for inputting information.

Storage device 3120 may be implemented with a wide variety of systems, subsystems and/or devices for providing memory or storage including, for example, one or more of the following: a read-only memory (ROM) device, a random access memory (RAM) device, a tape or disk drive, an optical storage device, a magnetic storage device, a redundant array of inexpensive disks (RAID), and/or any other device capable of providing storage and/or memory.

Network interface 3130 may exchange data between the communications channel 2300 and computing platform 3300 and may also exchange data between the input/output module 3100 and the computing platform 3300. Furthermore, network interface 3300 may permit a connection to any network capable of being connected to the input/output module 3100 including at least one or more of the following networks: an Ethernet network, an Internet Protocol network, a telephone network, a radio network, or a cellular network or any mechanism for permitting communication between two or more nodes (or remote locations).

The display 3135 *(e.g.,* a cathode ray tube, liquid crystal display, or other information presentation mechanism) may display the output of the computing platform 3300 for viewing. Alternatively, the printer device 3140 may provide hardcopy output for the computing platform 3300. For example, content information for a web page may be displayed and or printed with the display 3135 or printer device 3140.

The system 2700 may be embodied in various forms including, for example, a processor, such as a computer that also includes the database 3600. Moreover, the above-noted features and other aspects and principles of the present invention may be implemented in various environments. Such environments and related applications may be specially constructed for performing the various processes and operations of the invention or they may include a general-purpose computer or computing platform selectively activated or reconfigured by code to provide the necessary functionality.

The processes disclosed herein are not inherently related to any particular computer or other apparatus, and may be implemented by a suitable combination of hardware, software, and/or firmware. For example, various general-purpose machines may be used with programs written in accordance with teachings of the invention, or it may be more convenient to construct a specialized apparatus or system to perform the methods and techniques disclosed herein.

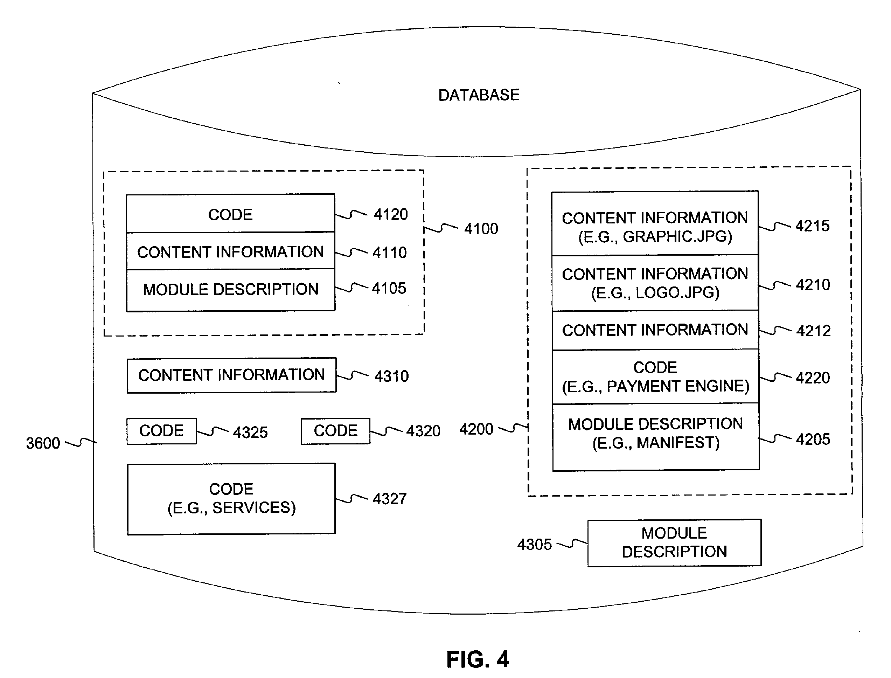

The database 3600 may contain information including code, content information, and a module description. FIG. 4 illustrates a schematic diagram of an exemplary database 3600. The database 3600 may include information, such as code 4120, 4325, 4320, 4220, 4327, content information 4110, 4210, 4212, 4215, 4310, and module descriptions 4105, 4205, and 4305. In one aspect of the invention, the computing platform 3300 may define modules 4100, 4200 and store the defined modules in database 3600.

Although database 3600 illustrates a module (e.g., module 4200) stored as a single structure, one of ordinary skill in the art would recognize that module 4200 with its associated information (e.g., content information 4215, 4210, 4212, code 4220, and module description 4205) may be stored in database 3600 in any type of alternative structure or format. Furthermore, although FIG. 4 illustrates the module 4200 stored in the database 3600, one of ordinary skill in the art would recognize that the module 4200 may be alternatively stored in memory (e.g., memory 3305 at FIG. 3), such that the module 4200 is callable from an operating system, network operating system, and/or network.

Moreover, although the database is illustrated in FIG. 3 as being co-located with the computing platform 3300, one of ordinary skill in the art would recognize that the database 3600 may be located anywhere by connecting through the communication channel 2300.

In one aspect of the invention, a module, such as modules 4100, 4200, may be used to facilitate construction of at least portions of websites, such as the reseller websites 2500a, 2500b, the third party websites 2610a, 2610b, and the supplier website 2700. For example, the computing platform 3300 may receive a request from a reseller website 2500a, determine the context (or origin) of the request, and provide, using a module stored in database 3600, the requested information to the reseller website.

The following description provides another example of invention operation. The reseller website 2500a may make a request to the supplier website 2700 for lipstick product information. The computing platform 3300 may process the request to determine an appropriate module for providing the information requested by the reseller website 2500a. For example, the computing platform 3300 may determine the appropriate module by searching module descriptions for "lipstick." In this example, the module 4100 may include the phrase "lipstick" in its description. Alternatively, a module may be selected based on the address, such as IP address, corresponding to the request (e.g., the reseller's IP address or the consumer's IP address).

The computing platform 3300 may also define the module by assembling the module 4100. To assemble the module, the computing platform 3300 may evaluate the module description 4105. The module description 4105 may include a manifest (or listing) of all the code and/or information associated with the module. For example, the module description 4105 may list sets of information, such as information for display 4110 and/or code (or rules) associated with the module 4120.

In one aspect of the invention, the code 4120 may include rules for enabling the assignment of a mode to the module 4100. The computing platform 3300 may enable the assignment of a mode based on context. For example, the computing platform 3300 may enable assignment of a mode based on the address of a reseller (e.g., reseller website 2500a) or on the product information requested (e.g., "lipstick"). The computing platform 3300 may then make the module with its enabled mode available for use in constructing the reseller's website 2500a.

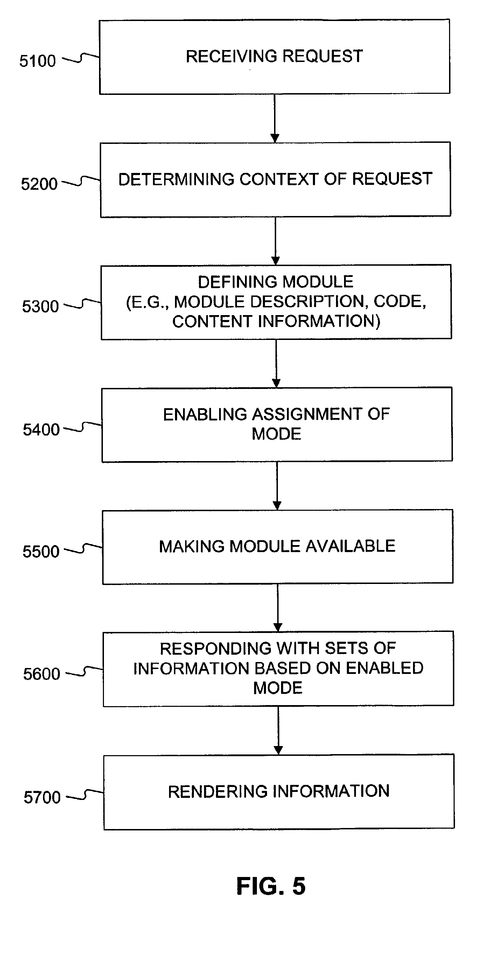

FIG. 5 illustrates another flow chart of exemplary method for constructing at least portions of a website. The computing platform 3300 of the supplier website 2700 may receive a request (step 5100); determine the context of the request (step 5200); define a module that includes sets of information, such as a module description, code, and content information (step 5300); enable assignment of a mode based on a context (step 5400); make the module available for constructing a website (or web page) or portion thereof (step 5600); and respond with sets of information to construct at least a portion of the website (or web page) (step 5600). The consumer, such as consumer 2100a, may then display (or render) the information (step 5700).

The computing platform 3300 may receive a request (step 5100), such as a request for product information, from a reseller website through the communication channel 2300. In one aspect of the invention, the computing platform 3300 may receive the request thorough an Internet connection. Moreover, the computing platform 3300 may receive a request based on a predetermined protocol, such as a Hyper Text Mark-up Language (HTML), Hyper Text Transfer Protocol (HTTP), Extensible Mark-up Language (XML), and/or Simple Object Access Protocol (SOAP). Furthermore, the request may be in the form of a call over the Internet to a module stored on the supplier website 2700. For example, the reseller website may locally invoke the name of a module that resides in the supplier website 2700.

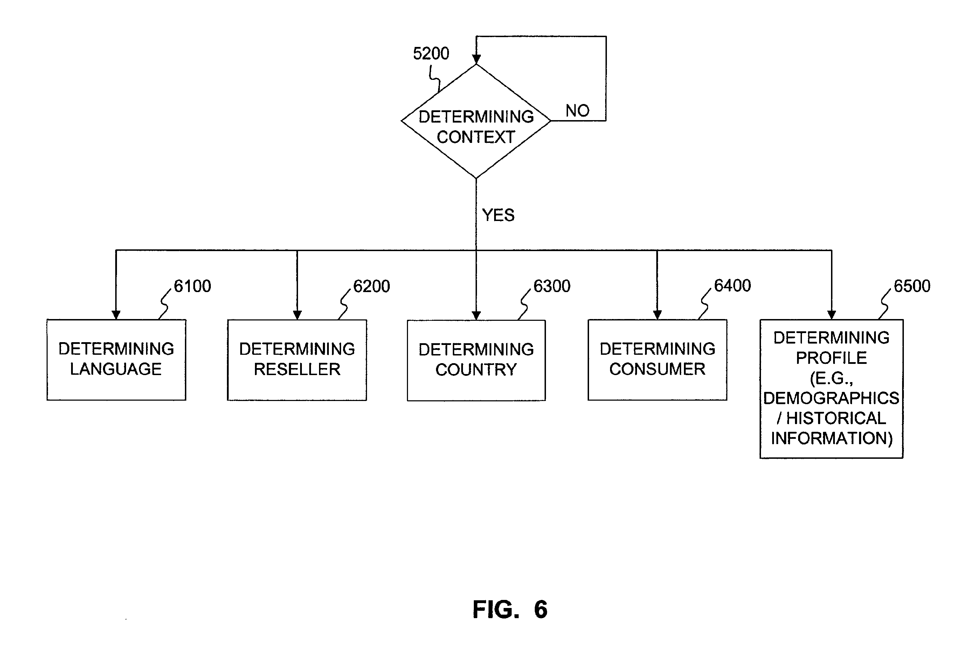

To determine the context of the request (step 5200), the computing platform 3300 may determine the origin of the request. FIG. 6 illustrates a flow chart depicting exemplary steps for determining the context (or origin) of the request. In one aspect of the invention, the computing platform 3300 may determine the language associated with the request (step 6100); determine the reseller associated with the request (step 6200); determine the country associated with the request (step 6300); determine an identity for the consumer (step 6400); and/or determine a profile associated with the request (step 6500). In one embodiment, at least one of the steps 6100-6500 may be performed by the computing platform 3300 to determine the context of the request (step 5200).

The computing platform 3300 may determine language (step 6100) by evaluating an address associated with a request. For example, the computing platform 3300 may determine a country based on an IP address associated with the request. In particular, the computing platform 3300 may determine that the IP address corresponds to a Japanese language reseller's website or to a Japanese language consumer. By determining the IP address associated with the request, the computing platform 3300 may also determine the identity of the reseller (step 6200) and determine the country of the request (step 6300).

In one aspect of the invention, when the computing platform 3300 receives a request in a predetermined protocol, such as HTTP, XML, and/or SOAP, the computing platform 3300 may determine language and/or reseller identity by directly reading the language (or style information) associated with the request. For example, a reseller's HTML request may include information that describes the displayed language and/or the reseller's identity.

The computing platform 3300 may also determine the consumer, such as the consumer 2100a, (step 6400) by evaluating the address associated with the request. For example, the request may include an IP address that identifies the consumer 2100a. On the other hand, to identify the consumer 2100a, the computing platform 3300 may read a cookie on the processor associated with the consumer 2100a or require the consumer 2100a to register (or login) with the computing platform 3300.

To determine a profile for the request (step 6500), the computing platform 3300 may first determine an IP address for the request. Based on the IP address, the computing platform 3300 may then determine a profile for the request that further describes the consumer 2100a and/or the consumer's purchasing history. Moreover, the determined profile may include information describing the consumer's age, income, gender, and residence. For example, the computing platform 3300 may receive a request with an IP address for the consumer 2100a; and then retrieve information stored in a database (e.g., database 3600) that describes the consumer 2100a. Alternatively, a retail website may directly provide information describing the consumer (e.g., age, gender, income, location). In one aspect of the invention, the computing platform 3300 may retrieve past purchasing information for the consumer 2100a. Alternatively, the computing platform 3300 may retrieve demographic information describing the consumer 2100a, such as a household income for the consumer 2100a and/or a median household income for consumer's area (e.g., zip code). By using a profile, the computing platform 3300 may further determine the context of the request, permitting a module at the supplier website 2700 to further customize the information provided to a reseller website and/or a consumer 2100a.

Referring again to FIG. 5, to define a module that includes sets of information, such as a module description, code, and content information for a web page (step 5300), the computing platform 3300 may define and store sets of information in a database, such as database 3600. The sets of information may include any information that may be provided to a web page (or website) that facilitates display, offer of sale, and/or sale of a product or product information.

In one aspect of the invention, the computing platform 3300 may define and store the sets of information within a module. Referring again to FIG. 4, the sets of information may include a module description 4105, 4205, and 4305, content information 4110, 4210, 4215, 4310, and code 4120, 4325, 4320, 4220, 4327. Furthermore, the sets of information may be used to construct at least a portion of a website (or web page).

In one aspect the invention, the module description may include at least one of the following: a name for the module, a list of code (or rules) associated with the module, content information associated with the module, network resources available to the module, and/or operating system resources available to the module (e.g., encryption).

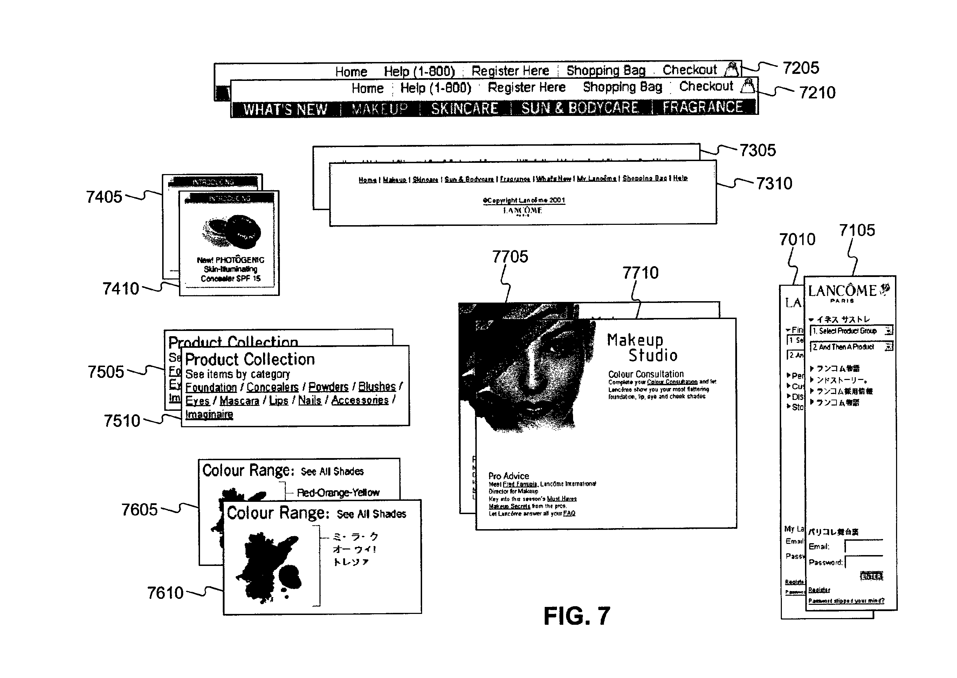

FIG. 7 illustrates content information stored in database 3600 that is consistent with one aspect of the invention. As illustrated, the computing platform 3300 may define, *inter alia,* an image of concealer 7405, 7410; a text menu of a "Product Collection" with code (i.e., HTML links to other web pages) 7510, 7505; a Japanese text description of "Colour Range" with a corresponding image 7610; an English text description of "Colour Range" with a corresponding image 7605; a text description of "Makeup Studio" with a corresponding image and HTML links to other web pages 7710, 7705; a text menu with HTML links to other web pages and a "LANCÔME" logo 7305, 7310; a text menu with HTML links to other web pages and a "Checkout" link permitting checkout (or purchase) 7210, 7205; a pull down menu with Japanese text and an "Email" login 7105; and a pull down menu with English text and an "Email" login 7010.

The computing platform 3300 may also define code and store the code in database 3600. In one aspect of the invention, the code may include rules (or functions) associated with a module, such as code for a payment engine that enables payment of a purchased product; code for determining the context (or origin) of a request; code that determines placement of information on a website (or web page); code that determines the language of the information provided to a website; and/or code for enabling assignment of a mode of a module.

In one aspect of the invention, the computing platform 3300 may also define rules (or code) that include business rules for customizing content based on context. Moreover, the computing platform 3300 may define the business rules to include a list of products offered by a retailer (e.g., retail website 2500a). The computing platform 3300 may use the business rules to access a retailer's product list (or catalog), enabling display of only products offered by the retailer.

The product list business rule may also be used with a web-based diagnosis of a consumer's skin. For example, a consumer may be asked a series of questions to determine the consumer's skin condition (e.g., oil, dry, normal, combination skin, youthful, or wrinkled). The computing platform 3300 may then provide a product listing customized to the consumer's diagnosed skin condition. In this example, the computing platform accesses the product list business rule and verifies that the product listing customized to the diagnosed condition includes only products that are actually sold by the retailer.

The product list business rule may also be used for cross-selling (or marketing). For example, when a consumer purchases a cosmetic product that alleviates the appearance of wrinkles, a module at the computing platform 3300 may use a cross-selling business rule to determine that sunscreen should also be displayed to the consumer since both products are associated with wrinkled skin. The computing platform 3300 may then use the product list business rule to further determine whether the retailer offers that sunscreen. If so, the computing platform 3300, using a module, provides information to construct a web site that is customized with the cross-selling information.

When a product is not offered by a retail website, the product list business rule may also permit the computing platform 3300 to provide an indication that a product is not offered by the retailer's web site, such as a static web page displaying a message.

Moreover, the computing platform 3300 may define rules that include personalization rules. The computing platform 3300 may use one or more personalization rules to customize information based on context. In particular, the personalization rules may include rules that customize information based on context associated with the consumer rather than the retailer. These personalization rules may include rules that customize content based on consumer context, such as a consumer's age, gender, or residential location. For example, a supplier website 2700 may provide sets of information using a module, such that the provided information includes content information customized to a consumer's age. Accordingly, the information associated with the module 4200 may be customized based on context at the consumer level.

Referring again to FIG. 5, in one aspect of the invention, to enable assignment of a mode (step 5400), the computing platform 3300 may determine the context of the request (see, e.g., FIG. 6 at steps 5200, and 6100-6500). The computing platform 3300 may determine context such that the origin of the request is determined, such as by determining through computing platform 3300, whether a request originated through a first reseller (e.g., reseller 2500a) or a second reseller (e.g., reseller 2500b). Based on the determined context, the computing platform 3300 may enable a mode of a module, such as module 4200. In a first mode, the computing platform 3300 may access the rules (or code) 4220 and then provide a first website (e.g., the reseller website 2500a) with sets of information, such as content information 4212 and 4215. In the second mode, the computing platform 3300 may access the rules (or code) 4220 and then provide a second website (e.g., the reseller website 2500b) with sets of information, such as content information 4210 and 4215.

In one embodiment, when in a first mode, the computing platform 3300 may also access the rules (or code) 4220 and then prevent the first reseller website 2500a from receiving information, such as the content information 4210. When in a second mode, the computing platform 3300 may also access the rules (or code) 4220 and then prevent the second reseller website 2500b from receiving information, such as the content information 4212. Although the above embodiment is described with reference to two modes, as with all embodiments described herein, the computing platform may support more than two modes.

The computing platform 3300 may make the module available to websites, such as the reseller websites 2500, the third party websites 2610, and the supplier website 2700 (step 5500). In one aspect of the invention, and as previously described, the module may be accessible through the communication channel 2300 (e.g., the Internet). For example, the reseller website 2500a may include code that calls a module for constructing the reseller website 2500a. The reseller website 2500a may then call the module, stored in database 3600, through the Internet 2300 using protocols, such as HTTP, XML, and/or SOAP, to make the request. Alternatively, one of ordinary skill in the art would recognize that any other protocols may be used instead to provide a request broker (e.g., a request broker compatible with the Common Object Request Broker Architecture (CORBA), JAVA, and/or Microsoft .Net) capable of calling the module over the Internet.

To respond with information to construct at least a portion of the website (or web page) (step 5600), the computing platform 3300 may provide information, serving as content for a website (or web page). Alternatively, the computing platform 3300 may provide a module, such as module 4200 of FIG. 4, to the reseller websites, the supplier websites, and/or the third party websites. When that is the case, the respective processors for each of the websites may use the provided module to enable assignment of a mode.

To render (or display) the content information (step 5700), information may be sent to a computing platform associated with the consumer 2100a who may use the sets of information to generate a display. For example, computing platform 3300 may convey rendering information to the consumer 2100a. The rendering information may be provided as HTML code to display text, graphical images, video, and/or audio. Thus, "rendering", as used herein, may include one or more of providing rendering information and rendering using the information.

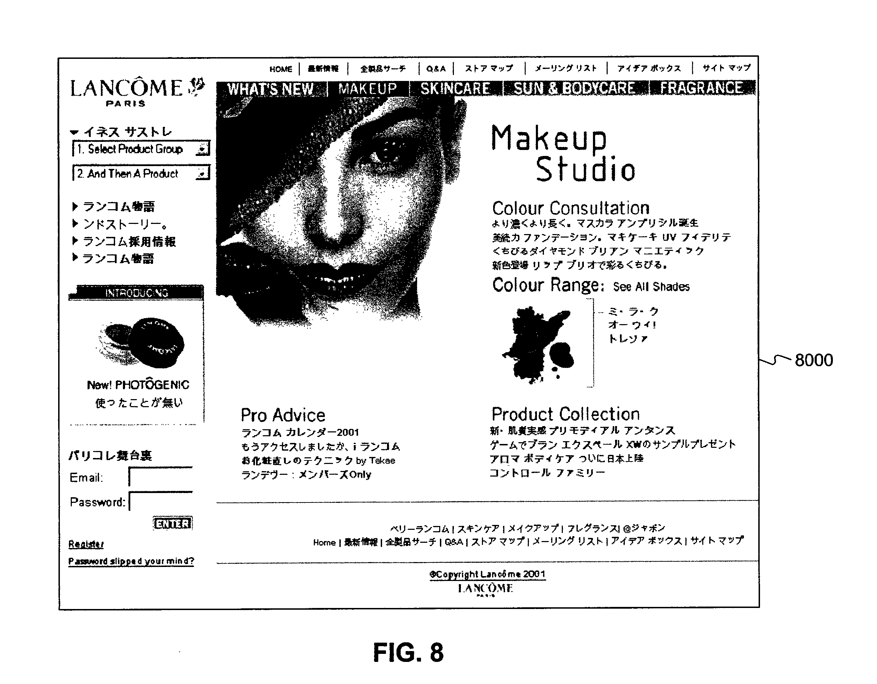

In one aspect of the invention, the enabled modes of the module may permit the computing platform 3300 to provide sets of information that may be displayed or viewed by the consumer 2100a as a web page. FIG. 8 shows an exemplary web page 8000 that displays sets of information provided by the computing platform 3300 using, for example, the module 4200 and based on the context associated with the request from the consumer 2100a.

Referring to FIGS. 3 and 8, the consumer 2100a may directly connect to the supplier website 2700. The supplier website 2700 may then provided sets of information, serving as content information for the web page of FIG. 8. The context for the request associated with FIG. 8 is a Japanese consumer 2100a connecting directly to the supplier website 2700. Accordingly, the sets of information associated with the enabled mode (e.g., a first mode) of the module correspond to sets of information customized to the Japanese consumer 2100a.

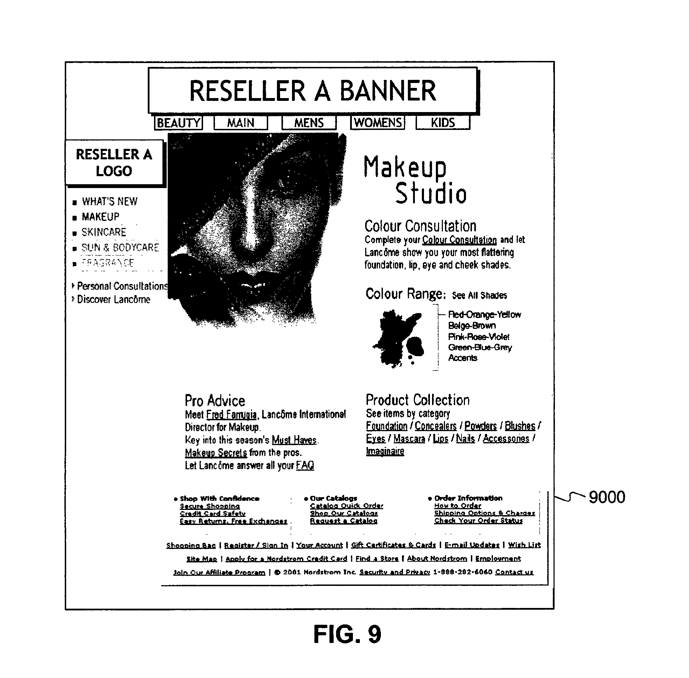

FIG. 9 shows another exemplary web page 9000 that displays sets of information provided by the computing platform 3300 using, for example, the module 4200. The sets of information may be based on the context associated with the request from the consumer 2100c. Referring to FIG. 9, the consumer 2100b browses the reseller website 2500a and selects a cosmetic product associated with the supplier website 2700. The supplier website 2700 may then provide sets of information using a module, such that the provided information serves as content information for the web page of FIG. 9. The context for the request is an English language consumer 2100b connecting through "Reseller A" (i.e., the reseller website 2500a). Accordingly, the sets of information associated with this enabled mode (e.g., a second mode) of the module 4200 may be customized to the English language consumer 2100b and/or the reseller website 2500a (i.e., "Reseller A"). Moreover, the supplier website may thus provides a virtual "shop" within the "shop" of the reseller website.

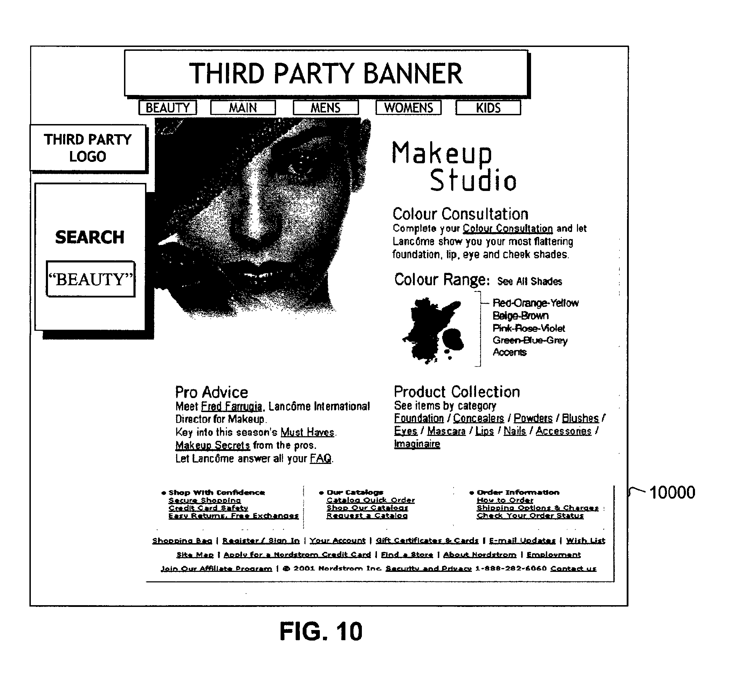

FIG. 10 shows another exemplary web page 10000 that displays sets of information provided by the computing platform 3300 using, for example, the module 4200 and based on the context associated with the request from the consumer 2100e. Referring to FIGS. 3 and 0, the consumer 2100e may browse the third party website 2610b; search for "Beauty" products through the third party website 2610b; display a cosmetic product associated with the supplier website 2700; and then select the displayed product. The supplier website 2700 may then provide sets of information, serving as content information for the web page of FIG. 10. The context for the request of FIG. 10 is a consumer 2100e connecting thorough a third party website 2610b. The sets of information associated with the enabled mode of FIG. 10 (e.g., a third mode) may thus display a common product in a manner that is customized based the context (or origin) of the request.

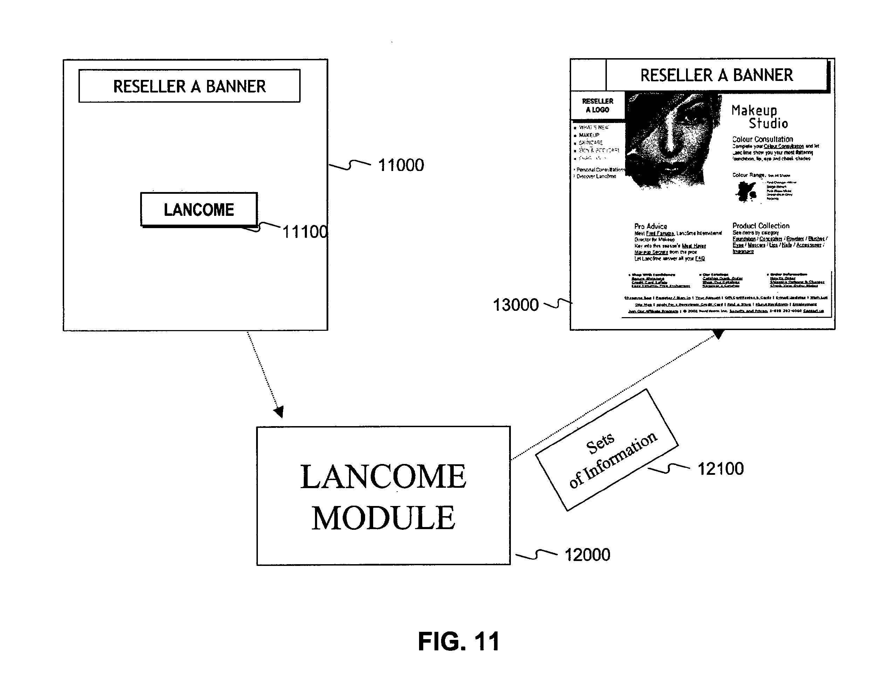

FIG. 11 depicts website construction using a module consistent with the present invention. A consumer (not shown) may browse a website, such as a retail website 11000. While browsing, the consumer may select a brand sold by the retailer by pointing and clicking on icon 11100. In this example, the icon 11100 corresponds to cosmetics by Lancôme. When the icon 11100 is selected, a computing platform (not shown) receives an indication that Lancôme is selected and constructs, using module 12000, at least portions of the retailer's website 13000 based on context.

As noted above (see, e.g., steps 1200-1400 at FIG. 1), the computing platform may also define the module, enable assignment of modes to a module, and make the module available for use in constructing at least portions of the retailer's website 13000.

Moreover, the computing platform may construct the website 13000 based on context. As noted above with respect to FIG. 6, the computing platform may determine context. In the example depicted in FIG. 11, the context may correspond to Lancôme, Reseller A (or a reseller identification number), and a language associated with Reseller A. The content information (e.g., sets of information 12100) associated with the enabled mode of module 1200 is thus customized based on context (i.e., Lancôme, Reseller A, and language).

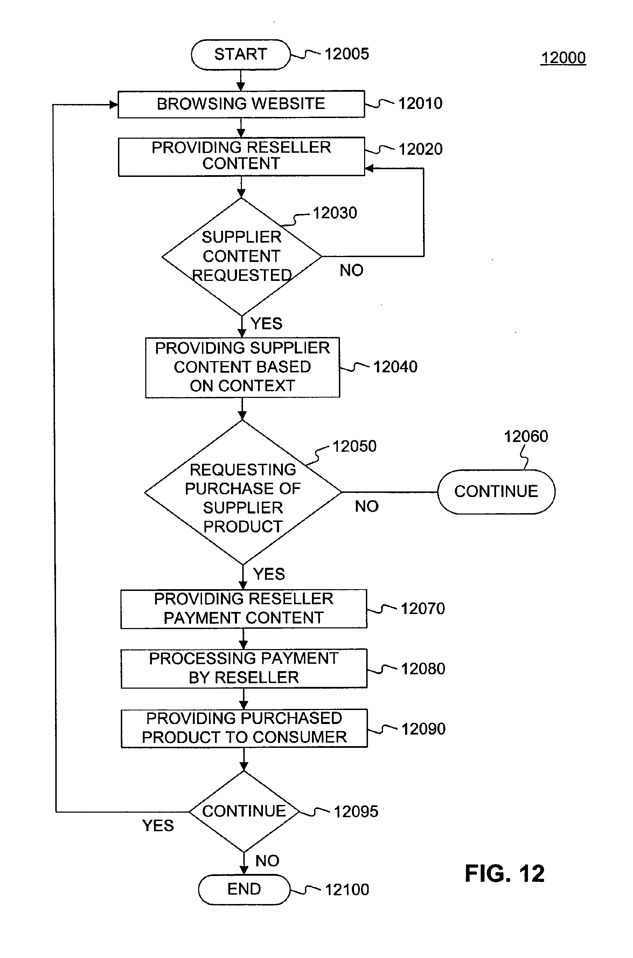

FIG. 12 shows another flow chart depicting exemplary steps of a method 12000 associated with facilitating construction of at least portions of websites using a module. Referring to FIGS. 3 and 12, the consumer 2100b may begin (step 12005) by connecting to the reseller website 2500a and browsing the reseller website 2500a for products offered for sale (step 12010). The reseller website 2500a may provide information to the consumer 2100b for viewing including product information for various products offered for sale (step 12020). When the consumer 2100b makes a request for product information associated with the supplier website 2700 (yes at step 12030), the reseller website 2500a may request information from the supplier website 2700 (step 12030). If the consumer 2100b does not make a request for product information associated with the supplier website 2500a (no at step 12030), the reseller website 2500a may continue providing product information associated with the reseller (step 12020).

When supplier content is requested, the supplier website 2700 may thus respond with the information (step 12040) using a module. The provided information permits the consumer 2100b to receive and to display information associated with the supplier website 2700. Although the consumer 2100b is shopping within the virtual "shop" of the reseller website 2500a, the consumer 2100b may also be shopping within a smaller virtual "shop" (or boutique) offering cosmetics under the branding and marketing control of the supplier website 2700 since the supplier website provides the information, using a module, to the reseller website.

When the consumer 2100b requests a product purchase associated with the supplier website 2700 (yes at step 12050), the supplier website 2700 may use a module to provide sets of information that include a payment engine (or address of a payment engine). The payment engine permits the consumer 2100b to purchase the product over the Internet (step 12070). Alternatively (no at step 12050), the consumer 2100b may not request a purchase and continue browsing (step 12060).

Although a user may be browsing a supplier's content, when it comes time to produce the product, the reseller may have a vested interest in the purchase occurring through the reseller's payment engine. This may be accomplished by assigning a rule to the module, directing the user to a payment engine associated with the reseller. Thus, if the consumer is shopping the Macy's website for Lancôme products, a module may direct the consumer to Macy's payment engine.

Alternatively, a payment engine provided by the supplier website 2700 may interface with the payment system of the reseller website 2500a. Moreover, the payment engine may permit the reseller website 2500a to accept payment for a purchase of the supplier's product (step 12080). The payment engine may thus be customized to the reseller's website and/or purchasing/payment system. After making the purchase, the consumer 2100b may continue browsing (step 12095). Otherwise, the consumer 2100b may stop browsing and thus end the session (step 12100).

Systems and methods consistent with the present invention also include computer readable media that include program instruction or code for performing various computer-implemented operations based on the methods and processes of the invention. The media and program instructions may be those specially designed and constructed for the purposes of the invention, or they may be of the kind well known and available to those having skill in the computer software arts. Examples of program instructions include for example machine code, such as produced by a compiler, and files containing a high level code that can be executed by the computer using an interpreter.

This application may discuss beauty products in connection with use by women. However, it is to be understood that such discussions are for exemplary purposes only. It is to be understood that the invention is equally applicable to all genders, and is not necessarily limited to the beauty industry. It is also to be understood that any functional aspect of the invention can be implemented via any location in the system or network, and data software may be resident at any location either in a network, at a stand-alone site, or on media in the custody and control of a user or subject.

It is to be further understood that the physical mechanisms (e.g. hardware, software, networks, systems) for implementing the methods of the invention are many. Networks, hardware and systems can be configured in a host of ways with software and hardware functionality residing at many alternative locations. In addition, systems other than the exemplary systems disclosed might be used to implement the invention. Therefore, it is to be understood that the methods of the invention are not limited to any particular structure.

Further, methods or portions thereof can be implemented in either an electronic environment, a physical environment, or combinations thereof. Thus, for example, although one or more portions of a method may occur in an electronic environment, a "purchase" portion of the method may occur in a brick and mortar store, or vice versa.

To the extent not inconsistent with the invention defined herein, the following global definitions are to be considered in interpreting the language of this patent and the claims herein. Where multiple definitions are provided, they should be considered as a single cumulative definition.

The term "image" may include one or more of two-dimensional and three-dimensional representations. In certain examples consistent with the invention, a plurality of images from different perspectives may be used to construct a three-dimensional image. In a broader sense, only a single image may be used. Depending on the embodiment, the term "image" may include either a visually perceptible image or electronic image data that may be either used to construct a visually perceptible image or to derive information about the subject. The image may be a body image corresponding to an anatomical portion of the subject, and may represent, for example, the subject's entire face, or a portion of the subject's face. The image may be a detailed picture (e.g., a digital image or a photograph) of a portion of the subject's body and/or a topological plot mapping contours of a portion of subject's body. If the image is representative of an external body condition, the image could be either an actual image showing the condition or an image including symbolizations of the condition, for example. The image may be an actual or a simulated image. Simulated images may include wholly or partially generated computer images, images based on existing images, and images based on stored features of a subject.

The term "image capture device", similar terms, and terms representing structures with similar functions may include one or more of a digital camera, webcam, film camera, analog camera, digital video camera, scanner, facsimile machine, copy machine, infrared imager, ultra-sound imaging device, or any other mechanism for acquiring an image of a subject's external body condition, an image of the subject's countenance, an/or an image of the subject's skin. An ultrasonic device might provide skin thickness information, or it might create a map on an area of the external location. Thus, the term "image" as used herein may be broader than a picture. Combinations of image capture devices may be used. For example, an image captured on photographic paper using a film camera might then be scanned on a flat bed scanner to create another image.

The term "capturing (an image)", or any form thereof, refers to the use of an image capture device to acquire an image. "Capturing" may refer to the direct act of using the image capture device to acquire the image. It may also include indirect acts to promote acquisition. To this end, "capturing" may include the indirect acts of providing access to hardware, or to at least one of a client-based algorithm and a server-based algorithm for causing the image capture device to capture an image. This may be accomplished by providing a user with software to aid in the image capture process, or providing the user with access to a network location at which the software resides. Also consistent with certain embodiments of the invention, capturing may include at least one of receiving an instruction from the subject to capture an image, indicating to the subject before the image is captured, and indicating to the subject when the image is captured.

The term "image processing technique" or similar terms, may include a software program, computer, application specific integrated circuit, electronic device and/or a processor designed to identify in an image one or more characteristics, such as a skin condition. Such techniques may involve binarization, image partitioning, Fourier transforms, fast Fourier transforms (FFTs), and/or discrete cosine transforms may be performed on all or part of the image, resulting in coefficients. Based on the coefficients, conditions may be located, as known in the art. Artificial intelligence, such as fuzzy logic, neural networks, genetic programming and decision tree programming, may also be used to identify conditions. Alternatively, one or more digital filters may be passed through the image for locating specific conditions. These examples are provided for illustrative purposes with the understanding that any image processing technique may be used.

The term "network interface" or similar terms, refer to any mechanism for aiding communications between various nodes or locations in a network. A network interface may include, for example a bus, a modem, or any other input/output structure. A network interface may permit a connection to any network capable of being connected to an input and/or output module located within at least one or more of the following exemplary networks: an Ethernet network, an Internet Protocol network, a telephone network, a radio network, a cellular network, or any mechanism for permitting communication between two or more modes or remote locations. In some invention embodiments, a network interface might also included a user interface.

The term "user interface" may include at least one component such as a keyboard, key pad, mouse, track ball, telephone, scanner, microphone, touch screen, web cam, interactive voice response system (IVR), voice recognition system or any other suitable input mechanism for conveying information. A user interface may also include an input port connected by a wired, optical, or wireless connection for electromagnetic transmissions. In some embodiments, a user interface may include connections to other computer systems to receive the input commands and data therefrom. User interface may further include a data reading device such as a disk drive for receiving input data from and writing data to storage media such as magnetic and optical disks.

As used herein terms such as "external body condition", "skin condition", and "actual condition" refer to conditions of at least one of the skin, teeth, hair, eyebrows, eyelashes, body hair, facial hair, fingernails, and/or toenails, or any other externality. Examples of skin conditions may include elasticity, dryness, cellulitis, sweating, aging, wrinkles, melanoma, exfoliation, desquamation, homogeneity of color, creases, liver spots, clarity, lines, micro-circulation, shininess, softness, smoothness, tone, texture, matitty, hydration, sag, suppleness, stress, springiness, firmness, sebum production, cleanliness, translucency, luminosity, irritation, redness, vasocolation, vasomotion, vasodilation, vasoconstriction, pigmentation, freckles, blemishes, oiliness, pore distribution, pore size, moles, birthmarks, acne, blackheads, whiteheads, pockmarks, warts, pustules, boils, blisters, marks, smudges, specks, psoriasis and other characteristics associated with the subject's skin. Examples of hair conditions may include keratin plug, length, dryness, oiliness, dandruff, pigmentation, thickness, density, root conditions, split ends, hair loss, hair thinning, scales, staging, cleanliness and other properties related to the subject's hair. Examples of fingernail and toenail conditions may include onychomycosis, split nails, delaminating, psoriasis, brilliancy, lines, spots, coloration, gloss, strength, brittleness, thickness, hangnail, length, disease, and other characteristics related to the subject's nails. Other conditions may include, for example, size and proportion of facial features, teeth discoloration, and any other aesthetic-related or physical, physiological, or biological conditions of the user.

"Enabling", "facilitating", and "causing" an action refer to one or more of a direct act of performing the action, and any indirect act of encouraging or being an accessory to the action. Thus, the terms include partnering or cooperating with an entity who performs the action and/or referring commerce to or having commerce referred from an entity who performs the action. Other examples of indirect activity encompassed within the definitions of "enabling", "facilitating", and "causing" may include providing a subject with one or more of tools to knowingly aid in performing the action, providing instructions on how to perform the action, providing prompts or cues to perform the action, or expressly encouraging performance of the action. Indirect activity may also include cooperating with an entity who either directly performs the action or who helps another perform the action. Tools may include software, hardware, or access (either directly, through hyperlink, or some other type of cooperation or partnering) to a network location (e.g., web site) providing tools to aid in performing the action. Thus, phrases such as "enabling access" and "enabling display" do not necessary require that the actor actually access or display anything. For example, the actor may perform the enabling function by affiliating with an entity who performs the action, or by providing instructions, tools, or encouragement for another to do the accessing and displaying.

Forms of the word "displaying" and like terms may also include indirect acts such as providing content for transmission over a network to a display device, regardless of whether the display device is in the custody or control of the sender. Any entity in a chain of delivering information for display performs an act of "displaying", as the term is used herein.

Likewise, the term "providing" includes direct and indirect activities. For example, providing access to a computer program may include at least one of providing access over a network to the computer program, and creating or distributing to the subject a computer program configured to run on the subject's workstation or computer. For example, a first party may direct network traffic to (either through electronic links or through encouragement to visit) a server or web site run by a second party. If the second party maintains a particular piece of software thereon, then it is to be understood that within the meaning of "providing access" as used herein, the first party is said to provide access to the particular software. Or if the first party directs a subject to a second party who in turn ships the particular software to the user, the first party is said to provide the user with access to the particular software. (Of course, in both of the above instances, the second party would also be providing access within the meaning of the phrase as used herein.) "Receiving" may include at least one of acquisition via a network, via verbally communication, via electronic transmission, via telephone transmission, in hard-copy form, or through any other mechanism enabling reception. In addition, "receiving" may occur either directly or indirectly. For example, receipt may occur through a third party acting on another party's behalf, as an agent of another, or in concert with another. Regardless, all such indirect and direct actions are intended to be covered by the term "receiving" as used herein. A received request, for example, may take one of many forms. It may simply be a checked box, clicked button, submitted form or oral affirmation. Or it might be a typed or handwritten textual request. Receiving may occur through an on-line interest form, e-mail, facsimile, telephone, interactive voice response system, or file transfer protocol transmitted electronically over a network at a web site, an internet protocol address, or a network account. A request may be received from a subject for whom information is sought, or an entity acting on the subject's behalf. "Receiving" may involve receipt directly or indirectly through one or more networks and/or storage mediums. Receipt may occur physically such as in hard copy form, via mail delivery or other courier delivery.

Forms of the word "maintain" are used broadly to include gathering, storing, accessing, providing access to, or making something available for access, either directly or indirectly. For example, those who maintain information include entities who provide a link to a site of a third party where the information is stored.

Consistent with the concepts set forth above, all other recited actions such as, for example, obtaining, determining, generating, selecting, applying, simulating, presenting, etc, are inclusive of direct and indirect actions. Thus, for purposes of interpreting the following claims, an entity performs a recited action through either direct or indirect activity. Further examples of indirect activity include sending signals, providing software, providing instructions, cooperating with an entity to have the entity perform the action, outsourcing direct or indirect actions, or serving in any way as an accessory to the specified action.

The term "product" is used to generically refer to tangible merchandise, goods, services, and actions performed. A "beauty product," "beauty care product," "cosmetic product" or similar terms, refer to products (as defined above) for effecting one or more external body conditions, such as conditions of the skin, hair and nails. Examples of tangible merchandise forms of beauty products include cosmetic goods, such as treatment products, personal cleansing products, and makeup products, in any form (e.g., ointments, creams, gels, sprays, supplement, ingesta, inhalants, lotions, cakes, liquids, and powders.)

Examples of services forms of beauty products include hair styling, hair cutting, hair coloring, hair removal, skin treatment, make-up application, and any other offering for aesthetic enhancement. Examples of other actions performed include massages, facial rubs, deep cleansings, applications of beauty product, exercise, therapy, or any other action effecting the external body condition whether performed by a professional, the subject, or an acquaintance of the subject.

The following is exemplary and non-exhaustive listing of a few beauty products- scrubs, rinses, washes, moisturizers, wrinkle removers, exfoliates, toners, cleansers, conditioners, shampoos, cuticle creams, oils, and anti-fungal substances, anti-aging products, anti-wrinkle products, anti-freckle products, skin conditioners, skin toners, skin coloring agents, tanners, bronzers, skin lighteners, hair coloring, hair cleansing, hair styling, elasticity enhancing products, agents, blushes, mascaras, eyeliners, lip liners, lipsticks, lip glosses, eyebrow liners, eye shadows, nail polishes, foundations, concealers, dental whitening products, cellulite reduction products, hair straighteners and curlers, and weight reduction products. A beauty care treatment regimen may involve the administration of one or more products, as defined above.

The terms "beauty advice", "beauty guidance", and similar terms are used interchangeably to refer to the provision of beauty related information to a subject. Advice or guidance includes one or more of beauty product recommendations (e.g., cosmetic product recommendations for products to treat conditions the subject is prompted to evaluate), remedial measures, preventative measures, predictions, prognoses, price and availability information, application and use information, suggestions for complementary products, lifestyle or dietary recommendations, or any other information intended to aid a subject in a course of future conduct, to aid a subject in understanding past occurrences, to reflect information about some future occurrences related to the subject's beauty or to aid a subject in understanding beauty products, as defined above.

The term "network" may include a public network such as the Internet or a telephony network, a private network, a virtual private network, or any other mechanism for enabling communication between two or more nodes or locations. The network may include one or more of wired and wireless connections. Wireless communications may include radio transmission via the airwaves, however, those of ordinary skill in the art will appreciate that various other communication techniques can be used to provide wireless transmission including infrared line of sight, cellular, microwave, satellite, blue-tooth packet radio and spread spectrum radio. Wireless data may include, but is not limited to, paging, text messaging, e-mail, Internet access and other specialized data applications specifically excluding or including voice transmission.

In some instances consistent with the invention, a network may include a courier network (e.g. postal service, United Parcel Service, Federal Express, etc.). Other types of networks that are to be considered within the scope of the invention include local area networks, metropolitan area networks, wide area networks, ad hoc networks, or any mechanism for facilitating communication between two nodes or remote locations.

"Artificial intelligence" (Al) is used herein to broadly describe any computationally intelligent systems that combine knowledge, techniques, and methodologies. An Al engine may be any system configured to apply knowledge and that can adapt itself and learn to do better in changing environments. Thus, the Al engine may employ any one or combination of the following computational techniques: neural network, constraint program, fuzzy logic, classification, conventional artificial intelligence, symbolic manipulation, fuzzy set theory, evolutionary computation, cybernetics, data mining, approximate reasoning, derivative-free optimization, decision trees, or soft computing. Employing any computationally intelligent techniques, the Al engine may learn to adapt to unknown or changing environment for better performance. Al engines may be implemented or provided with a wide variety of components or systems, including one or more of the following: central processing units, co-processors, memories, registers, or other data processing devices and subsystems.

Al engines may be trained based on input such as product information, expert advice, user profile, or data based on sensory perceptions. Using input an Al engine may implement an iterative training process. Training may be based on a wide variety of learning rules or training algorithms. For example, the learning rules may include one or more of the following: back-propagation, real-time recurrent learning, pattern-by-pattern learning, supervised learning, interpolation, weighted sum, reinforced learning, temporal difference learning, unsupervised learning, or recording learning. As a result of the training, Al engine may learn to modify its behavior in response to its environment, and obtain knowledge. Knowledge may represent any information upon which Al engine may determine an appropriate response to new data or situations. Knowledge may represent, for example, relationship information between two or more products. Knowledge may be stored in any form at any convenient location, such as a database.

Since Al engine may learn to modify its behavior, information describing relationships for a universe of all combinations of products may not need to be maintained by the Al engine or any other component of the system.

"Personal information", "subject specific information", "user specific information", "user profile", "personal characteristics", "personal attributes", "profile information", and like terms (collectively referred to in this section as "personal information") may broadly encompass any information about the subject or user. Such information may, for example, fall within categories such as physical characteristics, fashion preferences, demographics, nutritional information, cosmetic usage information, medical history information, environmental information, beauty product usage information, lifestyle, and may include information such as name; age; birth date; height; weight; ethnicity; eating habits; vacation patterns; geographic location of the individual's residence, location, or work; work habits; sleep habits; toiletries used; exercise habits; relaxation habits; beauty care habits; smoking and drinking habits; sun exposure habits; use of sunscreen; propensity to tan; number of sunburns and serious sunburns; dietary restrictions; dietary supplements or vitamins used; diagnosed conditions affecting the external body, such as melanoma; an image, such as a picture or a multimedia file of the subject; facial feature characteristics; family history information such as physical characteristics information about relatives of the subject (e.g., premature balding, graying, wrinkles, etc.); external body condition (as defined previously); color preferences, clothing style preferences, travel habits; entertainment preferences; fitness information; adverse reactions to products, compounds, or elements (e.g., sun exposure); body chemistry, use of prior beauty care products and their effectiveness; purchasing, shopping, and browsing habits; hobbies; marital status; whether the subject is a parent; country of residence; region of residence; birth country and region; religious affiliation; political affiliation; whether the subject is an urban dweller suburban dweller or rural area dweller; size of urban area in which the subject lives; whether the subject is retired; annual income, sexual preference, or any other information reflecting habits, preferences, or affiliations of the subject.

Personal information may also include information electronically gleaned by tracking the subject's electronic browsing or purchasing habits, or as the result of cookies maintained on the subject's computer, responses to surveys, or any other mechanism providing information related to the subject. In addition, personal information may be gathered through non-electronic mechanisms such as hard copy surveys, personal interviews, or consumer preference polls.

"Complementary" and "complementary product" refers to one or more of physical, physiological, biologically, and aesthetic compatibility. A product may be complementary with one or more of another product, a group of products, or a subject. In that latter instance, whether a product is considered "complementary" may be a function of personal information of the subject. Thus, for example a product may be complementary if it is unlikely to cause an adverse allergic reaction; if it physically blends well with another product; or if it is aesthetically consistent with the subject or one or more other products. Aesthetic compatibly may refer to the fact that two products are aesthetically appealing (or do not clash) when worn together. The identification of a complementary product may also be based on product characteristics, user preferences, survey data, or expert advice.

As used herein, the words "may" and "may be" are to be interpreted in an open-ended, non-restrictive manner. At minimum, "may" and "may be" are to be interpreted as definitively including structure or acts recited. Further, the word "or" is to be interpreted in the conjunctive and the disjunctive.

While flow charts presented herein illustrate a series of sequential blocks for exemplary purposes, the order of blocks is not critical to the invention in its broadest sense. Further, blocks may be omitted and others added without departing from the spirit of the invention. Also, the invention may include combinations of features described in connection with differing embodiments.

Although a focus of the disclosure may be on server-side methods, it is nevertheless to be understood that the invention includes corresponding client-side methods, software, articles of manufacture, and computer readable media, and that computer readable media can be used to store instructions for some or all of the methods described herein. Further, it is to be understood that disclosed structures define means for implementing the functionality described herein, and that the invention includes such means for performing the disclosed functions.

In the foregoing Description of Exemplary Embodiments, various features are grouped together in a single embodiment for purposes of streamlining the disclosure. This method of disclosure is not to be interpreted as reflecting an intention that the claimed invention requires more features than are expressly recited in each claim. Rather, as the following claims reflect, inventive aspects lie in less than all features of a single foregoing disclosed embodiment. Thus, the following claims are hereby incorporated into this Description of the Exemplary Embodiments, with each claim standing on its own as a separate embodiment of the invention.

## Claims

1. A method for facilitating modular construction of at least portions of first and second websites configured to offer for sale at least one common product, the method comprising:
defining at least one module for containing a first set of information for incorporation into a first website, an alternative second set of information for incorporation into the second website, a third set of information for incorporation into both the first and second websites, and rules governing how the first, second, and third sets of information are to be incorporated into the first and second websites;
enabling the assignment of at least two modes to the module, such that in a first mode, rules in the module are accessed to cause the first and third sets of information to be incorporated into the first website while the second set of information is prevented from being incorporated, and in a second mode rules in the module are accessed to cause the second and third sets of information to be incorporated into the second website while the first set of information is prevented from being incorporated; and
making the module available for use in constructing the first and second websites, such that, using the same module, the first and second websites may incorporate common information while each incorporating information unique to each website.

2. The method according to the preceding claim, wherein the first set of information includes payment information associated with an operator of the first website, the second set of information includes payment information associated with an operator of the second website, and wherein the third set of information includes product identifying information.

3. The method according to the preceding claim, wherein the product identifying information includes product specifications.

4. The method according to any one of the two preceding claims, wherein the product identifying information includes a product illustration.

5. The method according to any one of the preceding claims, wherein the first website is a web site of a product manufacturer, and wherein the second web site is a web site of a product reseller.

6. The method according to the preceding claim, wherein the first set of information includes information directing users to a payment engine designated by the product manufacturer and the second set of information includes information directing users to an alternative payment engine designated by the product reseller.

7. The method according to any one of the preceding claims, wherein enabling assignment of at least two modes includes enabling an association of at least first and second addresses with the module so that when the module is referred to by the first address, the first mode of display occurs and when the module is referred to by the second address, the second mode of display occurs.

8. The method according to the preceding claim, wherein, in the first display, payment information designated by an operator of the first website is displayed, and in the second display, payment information designated by an operator of the second website is displayed.

9. The method according to any one of the preceding claims, wherein the at least one module includes a plurality of modules, each module for containing information unique to the first and second websites and each module for containing information common to the first and second websites.

10. The method according to any one of the preceding claims, wherein the module is configured to permit operators of the first and second websites to each input their own unique information for display.

11. The method according to any one of the preceding claims, wherein the at least one common product is at least one of a lipstick, lipliner, an eyeliner, an eye shadow, a blush, a concealer, a base, a mascara, an anti-wrinkle product, an anti-aging product, a tanning product, a cleansing product, a hair product, and a beauty care product.

12. The method according to any one of the preceding claims, wherein at least one of the first, second and a third set of information is text-based information.

13. The method according to any one of the preceding claims, wherein at least one of the first, second and third sets of information includes an image.

14. The method according to any one of the preceding claims, further comprising receiving a request from the first website, determining context information for the request, and applying the rules to respond to the request with content customized to the determined context information.

15. A method according to any one of the preceding claims, wherein said module enables a display of a first set of payment instructions on the first web site, a second set of payment instructions on the second website, and common information for display on both the first and second websites;
the method further comprising:
assigning at least two display modes to the module, wherein in a first display mode the first payment instructions and the common information are caused to be displayed, and in a second display mode the second payment instructions and the common information are caused to be displayed; and
making the module available for use in the first and second websites.

16. The method according to the preceding claim, further comprising enabling the second supplier to modify the module to insert the second set of payment instructions.

17. The method according to any one of the preceding claims, wherein the first website is a supplier's website and the second website is a reseller's website, the method further comprising:
enabling assignment of at least first and second addresses to the module, such that when the module is called in the supplier's website by the first address, the first and third sets of information are caused to be incorporated into the supplier's web site while the second set of information is prevented from being incorporated into the supplier's website, and when the module is called in the reseller's web site by the second address, the second and third sets of information are caused to be incorporated into the reseller's website while the first set of information is prevented from being incorporated into the reseller's website; and
making the module available for use in constructing the supplier's and reseller's web sites, such that, using the same module, the supplier and the reseller web sites may incorporate common information while at the same time being customized.

18. The method according to the preceding claim, including a first payment engine function in the supplier website enabled by the first set of information and an alternative second payment engine function in the reseller website enabled by the second set of information.

19. The method according to the preceding claim, including displaying identifying information unique to each of the supplier and the reseller, the first set of information including identifying information unique to the supplier and the second set of information including identifying information unique to the reseller.

20. The method according to any one of the preceding claims, wherein the at least one module contains the first set of information for display on the first website in a first language, the alternative second set of information for display on the second website in a second language, and the third set of information for display on the first website in the first language and on the second website in the second language;
and wherein the two modes are display modes, such that in the first display mode, the first and third sets of information are caused to be displayed in the first language while the second set of information is prevented from being displayed, and in the second display mode the second and third sets of information are caused to be displayed in the second language while the first set of information is prevented from being displayed;
and wherein the first and second websites may display common information about the at least one common product while each displaying information unique to an operator of each website.

21. The method according to any one of claims 1 to 19, for facilitating modular construction of at least portions of first and second websites in differing languages, both sites offering for sale at least one common product through differing entities, wherein the at least one module contains a first set of information for display on the website of a first entity in a first language, an alternative second set of information for display on the website of a second entity in a second language, a third set of information for display on the website of the first entity in the first language and on the website of the second entity in the second language, and a set of rules governing how the first, second, and third sets of information are to be incorporated into the websites of the first and second entities;
wherein the two module are display modes, such that in the first display mode, rules in the module are accessed to cause the first and third sets of information to be displayed in the first language while the second set of information is prevented from being displayed, and in the second display mode rules in the module are accessed to cause the second and third sets of information to be displayed in the second language while the first set of information is prevented from being displayed; and
wherein each of the first and second entities may display common information to offer for sale, in at least two differing languages, the same product, while at the same time causing incorporation into each website information unique to each website.

22. A method for facilitating modular construction of at least portions of first and second websites both offering for sale at least one common product, the method comprising:
defining a module for enabling a display of a first set of payment instructions on a first web site, a second set of payment instructions on a second website, and common information for display on both the first and second websites;
assigning at least two display modes to the module, wherein in a first display mode the first payment instructions and the common information are caused to be displayed, and in a second display mode the second payment instructions and the common information are caused to be displayed; and
making the module available for use in the first and second websites.

23. A methods for enabling components of a supplier's website to be integrated into a website of a reseller, the method comprising:
enabling alternative functionality in the supplier's website and in the reseller's website using at least one common module containing a first set of information for incorporation into the supplier's website, an alternative second set of information for incorporation into the reseller's website, and a third set of common information for incorporation into both the supplier's and the reseller's website;
enabling assignment of at least first and second addresses to the module, such that when the module is called in the supplier's website by the first address, the first and third sets of information are caused to be incorporated into the supplier's web site while the second set of information is prevented from being incorporated into the supplier's website, and when the module is called in the reseller's web site by the second address, the second and third sets of information are caused to be incorporated into the reseller's website while the first set of information is prevented from being incorporated into the reseller's website; and
making the module available for use in constructing the supplier's and reseller's web sites, such that, using the same module, the supplier and the reseller web sites may incorporate common information while at the same time being customized.

24. A method for facilitating modular construction of at least portions of first and second websites in differing languages, both sites offering for sale at least one common product through differing entities, the method comprising:
defining at least one module for containing a first set of information for display on the first website in a first language, an alternative second set of information for display on the second website in a second language, and a third set of information for display on the first website in the first language and on the second website in the second language;
enabling the assignment of at least two display modes to the module, such that in a first display mode, the first and third sets of information are caused to be displayed in the first language while the second set of information is prevented from being displayed, and in a second display mode the second and third sets of information are caused to be displayed in the second language while the first set of information is prevented from being displayed; and
making the module available for use in constructing the first and second websites so that, using the same module, the first and second websites may display common information about the at least one common product while each displaying information unique to an operator of each website.

25. A method for facilitating modular construction of at least portions of first and second websites in differing languages, both sites offering for sale at least one common product through differing entities, the method comprising:
defining at least one module containing a first set of information for display on the website of a first entity in a first language, an alternative second set of information for display on the website of a second entity in a second language, a third set of information for display on the website of the first entity in the first language and on the website of the second entity in the second language, and a set of rules governing how the first, second, and third sets of information are to be incorporated into the websites of the first and second entities;
enabling the assignment of at least two display modes to the module, such that in a first display mode, rules in the module are accessed to cause the first and third sets of information to be displayed in the first language while the second set of information is prevented from being displayed, and in a second display mode rules in the module are accessed to cause the second and third sets of information to be displayed in the second language while the first set of information is prevented from being displayed; and
making the module available for use in constructing the websites of the first and second entities, so that, using the same module, each of the first and second entities may display common information to offer for sale, in at least two differing languages, the same product, while at the same time causing incorporation into each website information unique to each website.

26. A system for facilitating modular construction of at least portions of first and second websites configured to offer for sale at least one common product, the system comprising:
means for defining at least one module for containing a first set of information for incorporation into a first website, an alternative second set of information for incorporation into the second website, a third set of information for incorporation into both the first and second websites, and rules governing how the first, second, and third sets of information are to be incorporated into the first and second websites;
means for enabling the assignment of at least two modes to the module, such that in a first mode, rules in the module are accessed to cause the first and third sets of information to be incorporated into the first website while the second set of information is prevented from being incorporated, and in a second mode rules in the module are accessed to cause the second and third sets of information to be incorporated into the second web site while the first set of information is prevented from being incorporated; and
means for making the module available for use in constructing the first and second websites, such that, using the same module, the first and second websites may incorporate common information while each incorporating information unique to each website.

27. The system according to the preceding claim, comprising at least one memory including code defining the at least one module; enabling the assignment of the at least two modes to the module, and making the module available for use in constructing the first and second websites, and
at least one processor for executing said code.

28. A computer program product for facilitating modular construction of at least portions of first and second websites configured to offer for sale at least one common product, the computer program comprising:
code defining at least one module for containing a first set of information for incorporation into a first website, an alternative second set of information for incorporation into the second website, a third set of information for incorporation into both the first and second websites, and rules governing how the first, second, and third sets of information are to be incorporated into the first and second websites;
code enabling the assignment of at least two modes to the module, such that in a first mode, rules in the module are accessed to cause the first and third sets of information to be incorporated into the first website while the second set of information is prevented from being incorporated, and in a second mode rules in the module are accessed to cause the second and third sets of information to be incorporated into the second web site while the first set of information is prevented from being incorporated; and
code for making the module available for use in constructing the first and second websites, such that, using the same module, the first and second websites may incorporate common information while each incorporating information unique to each website.

29. A system for enabling components of a supplier's web site to be integrated into a website of a reseller, the system comprising:
means for enabling alternative functionality in the supplier's web site and in the reseller's website using at least one common module containing a first set of information for incorporation into the supplier's website, an alternative second set of information for incorporation into the reseller's website, and a third set of common information for incorporation into both the supplier's and the reseller's website;
means for enabling assignment of at least first and second addresses to the module, such that when the module is called in the supplier's website by the first address, the first and third sets of information are caused to be incorporated into the supplier's web site while the second set of information is prevented from being incorporated into the supplier's website, and when the module is called in the reseller's web site by the second address, the second and third sets of information are caused to be incorporated into the reseller's website while the first set of information is prevented from being incorporated into the reseller's website; and
means for making the module available for use in constructing the supplier's and reseller's web sites, such that, using the same module, the supplier and the reseller web sites may incorporate common information while at the same time being customized.

30. A system for enabling components of a supplier's web site to be integrated into a website of a reseller, the system comprising:
at least one memory including
code enabling alternative functionality in the supplier's web site and in the reseller's website using at least one common module containing a first set of information for incorporation into the supplier's website, an alternative second set of information for incorporation into the reseller's website, and a third set of common information for incorporation into both the supplier's and the reseller's website,
code enabling assignment of at least first and second addresses to the module, such that when the module is called in the supplier's website by the first address, the first and third sets of information are caused to be incorporated into the supplier's web site while the second set of information is prevented from being incorporated into the supplier's website, and when the module is called in the reseller's web site by the second address, the second and third sets of information are caused to be incorporated into the reseller's website while the first set of information is prevented from being incorporated into the reseller's website, and
code for making the module available for use in constructing the supplier's and reseller's web sites, such that, using the same module, the supplier and the reseller web sites may incorporate common information while at the same time being customized; and
at least one processor for executing said code.

31. A computer program product for enabling components of a supplier's web site to be integrated into a website of a reseller, the computer program product comprising:
code enabling alternative functionality in the supplier's web site and in the reseller's website using at least one common module containing a first set of information for incorporation into the supplier's website, an alternative second set of information for incorporation into the reseller's website, and a third set of common information for incorporation into both the supplier's and the reseller's website;
code enabling assignment of at least first and second addresses to the module, such that when the module is called in the supplier's website by the first address, the first and third sets of information are caused to be incorporated into the supplier's web site while the second set of information is prevented from being incorporated into the supplier's website, and when the module is called in the reseller's web site by the second address, the second and third sets of information are caused to be incorporated into the reseller's website while the first set of information is prevented from being incorporated into the reseller's website; and
code for making the module available for use in constructing the supplier's and reseller's web sites, such that, using the same module, the supplier and the reseller web sites may incorporate common information while at the same time being customized.

32. A system for facilitating modular construction of at least portions of first and second websites in differing languages, both sites offering for sale at least one common product through differing entities, the system comprising:
means for defining at least one module for containing a first set of information for display on the first website in a first language, an alternative second set of information for display on the second website in a second language, and a third set of information for display on the first website in the first language and on the second website in the second language;
means for enabling the assignment of at least two display modes to the module, such that in a first display mode, the first and third sets of information are caused to be displayed in the first language while the second set of information is prevented from being displayed, and in a second display mode the second and third sets of information are caused to be displayed in the second language while the first set of information is prevented from being displayed; and
means for making the module available for use in constructing the first and second websites, so that, using the same module, the first and second websites may display common information about the at least one common product while each displaying information unique to an operator of each website.

33. A system for facilitating modular construction of at least portions of first and second websites in differing languages, both sites offering for sale at least one common product through differing entities, the system comprising:
at least one memory including
code defining at least one module for containing a first set of information for display on the first website in a first language, an alternative second set of information for display on the second website in a second language, and a third set of information for display on the first website in the first language and on the second website in the second language,
code enabling the assignment of at least two display modes to the module, such that in a first display mode, the first and third sets of information are caused to be displayed in the first language while the second set of information is prevented from being displayed, and in a second display mode the second and third sets of information are caused to be displayed in the second language while the first set of information is prevented from being displayed, and
code for making the module available for use in constructing the first and second websites, so that, using the same module, the first and second websites may display common information about the at least one common product while each displaying information unique to an operator of each website; and at least one processor for executing said code.

34. A computer program product for facilitating modular construction of at least portions of first and second websites in differing languages, both sites offering for sale at least one common product through differing entities, the product comprising:
code defining at least one module for containing a first set of information for display on the first website in a first language, an alternative second set of information for display on the second website in a second language, and a third set of information for display on the first website in the first language and on the second website in the second language;
code enabling assignment of at least two display modes to the module, such that in a first display mode, the first and third sets of information are caused to be displayed in the first language while the second set of information is prevented from being displayed, and in a second display mode the second and third sets of information are caused to be displayed in the second language while the first set of information is prevented from being displayed; and
code for making the module available for use in constructing the first and second websites, so that, using the same module, the first and second websites may display common information about the at least one common product while each displaying information unique to an operator of each website.

35. A system for facilitating modular construction of at least portions of first and second websites in differing languages, both sites offering for sale at least one common product through differing entities, the system comprising:
means for defining at least one module for containing a first set of information for display on the website of a first entity in a first language, an alternative second set of information for display on the website of a second entity in a second language, a third set of information for display on the website of the first entity in the first language and on the website of the second entity in the second language, and a set of rules governing how the first, second, and third sets of information are to be incorporated into the websites of the first and second entities;
means for enabling the assignment of at least two display modes to the module, such that in a first display mode, rules in the module are accessed to cause the first and third sets of information to be displayed in the first language while the second set of information is prevented from being displayed, and in a second display mode rules in the module are accessed to cause the second and third sets of information to be displayed in the second language while the first set of information is prevented from being displayed; and
means for making the module available for use in constructing the websites of the first and second entities, so that, using the same module, each of the first and second entities may display common information to offer for sale, in at least two differing languages, the same product, while at the same time causing incorporation into each website information unique to each website.

36. A system for facilitating modular construction of at least portions of first and second websites in differing languages, both sites offering for sale at least one common product through differing entities, the system comprising:
at least one memory including
code defining at least one module for containing a first set of information for display on the website of a first entity in a first language, an alternative second set of information for display on the website of a second entity in a second language, a third set of information for display on the website of the first entity in the first language and on the website of the second entity in the second language, and a set of rules governing how the first, second, and third sets of information are to be incorporated into the websites of the first and second entities,
code enabling assignment of at least two display modes to the module, such that in a first display mode, rules in the module are accessed to cause the first and third sets of information to be displayed in the first language while the second set of information is prevented from being displayed, and in a second display mode rules in the module are accessed to cause the second and third sets of information to be displayed in the second language while the first set of information is prevented from being displayed, and
code for making the module available for use in constructing the websites of the first and second entities, so that, using the same module, each of the first and second entities may display common information to offer for sale, in at least two differing languages, the same product, while at the same time causing incorporation into each website information unique to each website; and
at least one processor for executing said code.

37. A computer program product for facilitating modular construction of at least portions of first and second websites in differing languages, both sites offering for sale at least one common product through differing entities, the product comprising:
code defining at least one module for containing a first set of information for display on the website of a first entity in a first language, an alternative second set of information for display on the website of a second entity in a second language, a third set of information for display on the website of the first entity in the first language and on the website of the second entity in the second language, and a set of rules governing how the first, second, and third sets of information are to be incorporated into the websites of the first and second entities;
code enabling assignment of at least two display modes to the module, such that in a first display mode, rules in the module are accessed to cause the first and third sets of information to be displayed in the first language while the second set of information is prevented from being displayed, and in a second display mode rules in the module are accessed to cause the second and third sets of information to be displayed in the second language while the first set of information is prevented from being displayed; and
code for making the module available for use in constructing the websites of the first and second entities, so that, using the same module, each of the first and second entities may display common information to offer for sale, in at least two differing languages, the same product, while at the same time causing incorporation into each website information unique to each website.
